# EUROPEAN PATENT SPECIFICATION

(11) **EP 2 911 355 B1**
(45) Date of publication and mention of the grant of the patent: **07.11.2018**
(21) Application number: 13846846.7
(22) Date of filing: 26.09.2013
(51) Int. Cl.: H04L 12/891, H04L 12/803

(54) **METHOD AND DEVICE FOR FLOW PATH NEGOTIATION IN LINK AGGREGATION GROUP**
VERFAHREN UND VORRICHTUNG FÜR STRÖMUNGSWEGVERHANDLUNG IN EINER VERKNÜPFUNGSAGGREGATIONSGRUPPE
PROCÉDÉ ET DISPOSITIF POUR UNE NÉGOCIATION DE TRAJET DE FLUX DANS UN GROUPE D'AGRÉGATION DE LIAISONS

(30) Priority: 19.10.2012 CN 201210401316
(43) Date of publication of application: 26.08.2015
(73) Proprietor: ZTE Corporation, Shenzhen, Guangdong 518057 (CN)
(72) Inventor: AO, Ting, Shenzhen, Guangdong 518057 (CN); YU, Jinghai, Shenzhen, Guangdong 518057 (CN)
(74) Representative: Modiano, Micaela Nadia
(86) International application number: PCT/CN2013/084353
(87) International publication number: WO 2014/059867

(56) References cited:
- EP-A1- 1 921 808
- EP-A1- 1 921 808
- CN-A- 101 018 228
- CN-A- 101 123 510
- INTERWORKING TASK GROUP OF IEEE 802 1: "Draft Standard for Local and Metropolitan Area Networks ; 802-1AX-REV-d0-3", IEEE DRAFT; 802-1AX-REV-D0-3, IEEE-SA, PISCATAWAY, NJ USA, vol. 802.1, no. d0-3, 10 September 2012 (2012-09-10), pages 1-183, XP017737095, [retrieved on 2012-09-10]
- "Requirements and Framework for Ethernet Service Protection in Metro Ethernet Networks", Technical Specification MEF 2, 8 February 2004 (2004-02-08), pages 1-41, XP055210537, Retrieved from the Internet: URL:http://www.metroethernetforum.org/PDF_ Documents/technical-specifications/MEF2.pd f [retrieved on 2015-09-01]

## Description

### Technical Field

The present invention relates to the field of communications, in particular to a method and device for traffic path negotiation in a link aggregation group.

### Background

With the rapid development of broadband services, interconnection between networks are more and more used, and the volume of carried services is also significantly increased. Within a network, multiple methods may be adopted to achieve protection of a link and nodes on the link according to the technology used in the network. At the same time, with the stronger requirement on protection of the network traffic, some operators propose the requirement of protecting network interconnection. The protection mentioned herein may be achieved by adopting a port aggregation manner, and a commonly used manner is port aggregation or loop protection. Currently, a standard commonly applied in the link aggregation supports port aggregation on one node, and thus can only be used in link protection; however, the node at a network edge interface can not be protected by the current link aggregation technology.

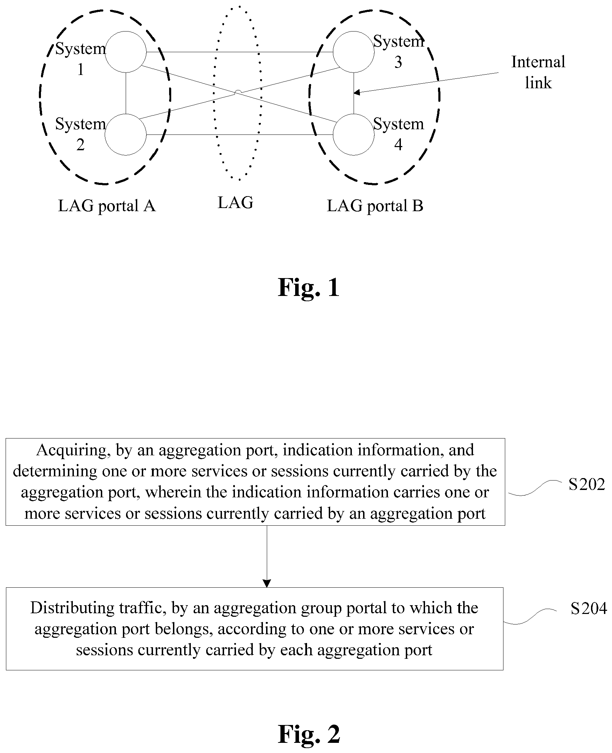

Therefore, in order to realize the diversification of networking manners at the interconnection area between networks, and to achieve the protection of both a link and an edge node, Institute of Electrical and Electronics Engineers (IEEE) Standard Organization of the United States proposes a technical solution of extending the link aggregation, to meet the requirement of dual redundant network interconnection protection for both the link and the node via a distributed link aggregation group distributed resilient network interconnect (DRNI), that is, each portal of the aggregation group is composed of multiple nodes, and aggregation links of the above-mentioned multiple nodes constitute one aggregation link group. Fig. 1 is a schematic diagram showing connection of network interconnection nodes according to related technology. As shown in Fig. 1, two portals A and B of a link aggregation group (LAG) both have two nodes, wherein portal A includes: system 1 and system 2; and portal B includes: system 3 and system 4. Multiple links of the four systems are aggregated together to form one LAG. Dual protection of both the link and node can be achieved via the distributed LAG. System 1 and system 2 in the portal A are connected via an internal link to perform communication; and system 3 and system 4 in the portal B are also connected via an internal link to perform communication.

Currently, the DRNI performs protection and load sharing based on the distinguishing of message services, but since the two ends respectively distribute traffic, the traffic of the same service cannot be ensured to be transmitted on the same aggregation link. This is in conflict with the application of the DRNI in protection of a network interface, and does not meet the requirement of a metropolitan area Ethernet forum (MEF) on protection of a network interface.

The document "INTERWORKING TASK GROUP OF IEEE 802 1: 'Draft Standard for Local and Metropolitan Area Networks; 802-1 AX-REV-d0-3', IEEE DRAFT; 802-1 AX-REV-DO-3, IEEE-SA, PISCATAWAY, NJ USA, vol. 802.1, no. d0-3, 10 September 2012 (2012-09-10), pages 1-183, XP017737095" discloses that Link Aggregation provides protocols, procedures, and managed object. The document "'Requirements and Framework for Ethernet Service Protection in Metro Ethernet Networks', Technical Specification MEF 2, 8 February 2004 (2004-02-08), pages 1-41 , XP055210537" provides requirements, a model, and a framework for discussing protection in Metro Ethernet Networks. The document "EP1921808" discloses that a method that protection overlay and system in which different service streams are distributed via a plurality of links. However, the above mentioned problem still remains unsolved.

### Summary

The present invention provides for a method for traffic path negotiation in a link aggregation group as defined in claim 1. The present invention also provides for a device for traffic path negotiation in a link aggregation group as defined in claim 11. Further advantageous aspects of the invention are set out in the dependent claims.

In particular, the embodiments of the present invention provide a method and device for traffic path negotiation in a link aggregation group, so as to at least solve the problem in the related art that traffic of the same service cannot be ensured to be transmitted on the same aggregation link when being transmitted on a DRNI.

The method for traffic path negotiation in a link aggregation group in the present invention includes: acquiring, by an aggregation port of an end of the link aggregation group, indication information, and determining one or more services or sessions currently carried by the aggregation port, wherein the indication information carries the one or more services or sessions currently carried by the aggregation port of the opposite end of the link aggregation group; and distributing, by the link an aggregation group portal to which the aggregation port belongs, traffic according to one or more services or sessions currently carried by each of the aggregation ports in the link aggregation group.

The method according to the invention further includes determining the one or more services or sessions currently carried by the aggregation port includes: modifying or setting the one or more services or sessions currently carried by the aggregation port according to a predefined policy.

In an example embodiment, in the aggregation group portal, each service or session corresponds to one aggregation port sequence.

In an example embodiment, according to the aggregation port sequence corresponding to each service or session in the aggregation group portal, one or more services or sessions to be carried by the aggregation port, and/or, the one or more services or sessions currently carried by the aggregation port are generated.

In an example embodiment, the aggregation port sequence is obtained by sorting according to a priority of carrying the service or session.

In an example embodiment, the one or more services or sessions to be carried by the aggregation port are formed by collecting, based on all aggregation port sequences, each service or session whose aggregation port sequence takes this aggregation port as an aggregation port having a highest priority of distributing the service or session.

The method according to the invention further includes, modifying, by the aggregation port, the one or more services or sessions currently carried by the aggregation port according to the predefined policy includes: in a case where the one or more services or sessions currently carried are inconsistent with the one or more services or sessions in the indication information, making a comparison, by the aggregation port, with a priority of an aggregation group portal to which an aggregation port of an opposite end belongs, based on a priority relationship of an aggregation group portal to which the aggregation port belongs to determine whether the one or more services or sessions currently carried by the aggregation port need to be modified; or, judging, by the aggregation port, whether the one or more services or sessions currently carried by the aggregation port need to be modified according to the received indication information, based on a master/slave relationship of the aggregation group portal to which the aggregation port belongs.

In an example embodiment, judging, by the aggregation port, whether the one or more services or sessions currently carried by the aggregation port need to be modified according to the received indication information based on the priority relationship of the aggregation group portal to which the aggregation port belongs, or, based on a master/slave relationship of the aggregation group portal to which the aggregation port belongs includes: when the priority of the aggregation group portal to which the aggregation port belongs is lower than that of the aggregation group portal to which the aggregation port of the opposite end belongs, or the aggregation group portal to which the aggregation port belongs is slave to the aggregation group portal to which the aggregation port of the opposite end belongs, then modifying, by the aggregation port, the one or more services or sessions currently carried by the aggregation port according to the received indication information.

The method according to the invention further includes, in alternative to the above step of modifying, by the aggregation port, the one or more services or sessions currently carried by the aggregation port according to the predefined policy , setting, by the aggregation port, the one or more services or sessions currently carried by the aggregation port according to the predefined policy includes: when the aggregation port does not form the one or more services or sessions currently carried by the aggregation port or content of the currently carried service or session is null, then setting, by the aggregation port, the one or more services or sessions currently carried by the aggregation port according to the received indication information.

In an example embodiment, the above-mentioned method further includes: when an aggregation link corresponding to the aggregation port has a fault or is unavailable, or, is separated from an aggregation link group, triggering one or more other aggregation ports apart from the aggregation port in the link aggregation group to modify its/their currently carried services or sessions.

In an example embodiment, traffic of the one or more services or sessions originally carried by the aggregation port is carried by one or more other available aggregation ports apart from the aggregation port.

In an example embodiment, the aggregation group portal to which the aggregation port belongs searches for an aggregation port having a second highest priority in each aggregation port sequence corresponding to the one or more services or sessions currently carried by the aggregation port, and triggers one or more found aggregation ports having the second highest priority to modify its/their currently carried services or sessions.

In an example embodiment, the aggregation port having the second highest priority is an available or a master aggregation port in the aggregation group portal.

In an example embodiment, the aggregation group portal to which the aggregation port belongs searching for the aggregation port having the second highest priority in each aggregation port sequence corresponding to the one or more services or sessions currently carried by the aggregation port, and triggering the one or more found aggregation ports having the second highest priority to modify its/their currently carried services or sessions includes: sending, by the aggregation port having the second highest priority, modified indication information, wherein the aggregation port of the opposite end modifies or sets, according to the modified indication information, one or more services or sessions currently carried by the aggregation port of the opposite end according to the predefined policy; and receiving, by the aggregation port having the second highest priority, indication information re-sent from the aggregation port of the opposite end to perform renegotiation.

In an example embodiment, the above-mentioned method further includes: when the aggregation link corresponding to one or more aggregation ports returns to service or re-joins the aggregation link group, if a protection mode of the aggregation group portal is a Revertive mode, then triggering each aggregation port in the aggregation group portal to adjust their respective one or more services or sessions carried.

In an example embodiment, after triggering each aggregation port in the aggregation group portal to adjust their respective one or more services or sessions carried, the method further includes: sending, by the aggregation port, indication information carrying one or more carried service or session after adjustment.

In an example embodiment, the above-mentioned method further includes: when an aggregation link corresponding to the aggregation port has a fault or is unavailable, or, is separated from the aggregation link group, triggering an aggregation group portal to which the aggregation port belongs to adjust the aggregation port sequence corresponding to each service or session; and re-acquiring, by the aggregation group portal to which the aggregation port belongs, one or more services or sessions carried by respective aggregation ports according to the adjusted aggregation port sequence corresponding to each service or session.

In an example embodiment, the above-mentioned method further includes: sending, by an aggregation port which carries a service or session of the aggregation port, modified indication information, wherein an aggregation port of the opposite end modifies or sets, according to the modified indication information, one or more services or sessions currently carried by the aggregation port of the opposite end according to the predefined policy; and receiving, by an aggregation port which carries a service or session of the aggregation port, indication information re-sent from the aggregation port of the opposite end to perform renegotiation.

In an example embodiment, the above-mentioned method further includes: when the aggregation link corresponding to one or more aggregation ports returns to service or re-joins the aggregation link group, if a protection mode of the aggregation group portal is a Revertive mode, then triggering the aggregation group portal to re-adjust the aggregation port sequence.

In an example embodiment, triggering the aggregation group portal to adjust the aggregation port sequence includes: triggering adjustment of the one or more services or sessions currently carried by the aggregation port.

In an example embodiment, the above-mentioned method further includes: when an aggregation link corresponding to one or more aggregation ports joins the aggregation link group, triggering modification of a service aggregation port sequence.

In an example embodiment, a failed aggregation link is detected via connectivity fault management (CFM) mechanism and the aggregation port sequence corresponding to each service or session sent on this aggregation link is searched, and an aggregation port sending the each service or session is re-determined.

In an example embodiment, the indication information is a type length value (TLV) field.

In an example embodiment, the indication information is carried in a link aggregation control protocol (LACP) message.

The device for traffic path negotiation in a link aggregation group in the present invention includes: a processing component, configured to acquire indication information, and determine one or more services or sessions currently carried by an aggregation port of one end of the link aggregation group, wherein the indication information carries one or more services or sessions currently carried by an aggregation port of the opposite end the link aggregation group; and traffic distribution component, configured to distribute traffic according to one or more services or sessions currently carried by each of aggregation ports in the link aggregation group.

According to invention, in the device for traffic path negotiation in a link aggregation, the processing component is configured to modify or set the one or more services or sessions currently carried by the aggregation port according to a predefined policy.

In an example embodiment, in an aggregation group portal, each service or session corresponds to one aggregation port sequence.

In an example embodiment, the processing component is configured to generate, according to the aggregation port sequence corresponding to each service or session in the aggregation group portal, one or more services or sessions to be carried by the aggregation port, and/or, the one or more services or sessions currently carried by the aggregation port.

In an example embodiment, the aggregation port sequence is obtained by sorting according to a priority of carrying the service or session.

In an example embodiment, the one or more services or sessions to be carried by the aggregation port are formed by collecting, based on all aggregation port sequences, each service or session whose aggregation port sequence takes this aggregation port as an aggregation port having a highest priority of distributing the service or session.

In the device for traffic path negotiation in a link aggregation group according to the invention, the processing component includes one of the following: a first processing element, configured to, in a case where the one or more services or sessions currently carried are inconsistent with the one or more services or sessions in the indication information, make a comparison with a priority of an aggregation group portal to which an aggregation port of an opposite end belongs based on a priority relationship of the aggregation group portal to which the aggregation port belongs to determine whether the one or more services or sessions currently carried by the aggregation port need to be modified; or, a second processing element, configured to judge whether the one or more services or sessions currently carried by the aggregation port need to be modified according to the received indication information, based on a master/slave relationship of the aggregation group portal to which the aggregation port belongs.

In an example embodiment, the first processing element is configured to modify, when the priority of the aggregation group portal to which the aggregation port belongs is lower than that of the aggregation group portal to which the aggregation port of the opposite end belongs, the one or more services or sessions currently carried by the aggregation port according to the received indication information, or, the second processing element is configured to modify, when the aggregation group portal to which the aggregation port belongs is slave to the aggregation group portal to which the aggregation port of the opposite end belongs, the one or more services or sessions currently carried by the aggregation port according to the received indication information.

In the device for traffic path negotiation in a link aggregation group according to the invention, the processing component further includes: a third processing element, configured to set, when the aggregation port does not form the one or more services or sessions currently carried by the aggregation port or content of the currently carried service or session is null, the one or more services or sessions currently carried by the aggregation port according to the received indication information.

In an example embodiment, the above-mentioned device further includes: a first triggering component, configured to trigger, when an aggregation link corresponding to the aggregation port has a fault or is unavailable, or, is separated from an aggregation link group, one or more other aggregation ports apart from the aggregation port in a link aggregation group to modify its/their currently carried services or sessions.

In an example embodiment, traffic of the one or more services or sessions originally carried by the aggregation port is carried by one or more other available aggregation ports apart from the aggregation port.

In an example embodiment, the first triggering component is configured to search for an aggregation port having a second highest priority in each aggregation port sequence corresponding to the one or more services or sessions currently carried by the aggregation port, and trigger one or more found aggregation ports having the second highest priority to modify its/their currently carried services or sessions.

In an example embodiment, the aggregation port having the second highest priority is an available or a master aggregation port in the aggregation group portal.

In an example embodiment, the first triggering component includes: a sending element, configured to send the modified indication information, wherein the aggregation port of the opposite end modifies or sets, according to the modified indication information, one or more services or sessions currently carried by the aggregation port of the opposite end according to the predefined policy; and a receiving element, configured to receive the indication information re-sent from the aggregation port of the opposite end to perform renegotiation.

In an example embodiment, the first triggering component is further configured to trigger, when the aggregation link corresponding to one or more aggregation ports returns to service or re-joins the aggregation link group, if a protection mode of the aggregation group portal is a Revertive mode, each aggregation port in the aggregation group portal to adjust their respective one or more services or sessions carried.

In an example embodiment, the above-mentioned device further includes: a first sending component, configured to send indication information carrying one or more carried service or session after adjustment.

In an example embodiment, the above-mentioned device further includes: a second triggering component, configured to trigger, when an aggregation link corresponding to the aggregation port has a fault or is unavailable, or, is separated from the aggregation link group, an aggregation group portal to which the aggregation port belongs to adjust an aggregation port sequence corresponding to each service or session; and an acquisition component, configured to re-acquire one or more services or sessions carried by respective aggregation ports according to the adjusted aggregation port sequence corresponding to each service or session.

In an example embodiment, the above-mentioned device further includes: a second sending component, configured to send the modified indication information, wherein an aggregation port of the opposite end modifies or sets, according to the modified indication information, one or more services or sessions currently carried by the aggregation port of the opposite end according to the predefined policy; and a receiving component, configured to receive the indication information re-sent from the aggregation port of the opposite end to perform renegotiation.

In an example embodiment, the second triggering component is further configured to trigger, when the aggregation link corresponding to one or more aggregation ports returns to service or re-joins the aggregation link group, if a protection mode of the aggregation group portal is a Revertive mode, the aggregation group portal to re-adjust the aggregation port sequence.

In an example embodiment, the above-mentioned device further includes: a third triggering component, configured to trigger, when an aggregation link corresponding to one or more aggregation ports joins the aggregation link group, modification of a service aggregation port sequence.

In an example embodiment, a failed aggregation link is detected via connectivity fault management (CFM) mechanism, the aggregation port sequence corresponding to each service or session sent on this aggregation link is searched, and an aggregation port sending the each service or session is re-determined.

In an example embodiment, the indication information is a type length value, TLV, field.

In an example embodiment, the indication information is carried in a link aggregation control protocol (LACP) message.

According to the embodiments which are not part of the claimed invention, an aggregation port acquires indication information, and determines one or more services or sessions currently carried by the aggregation port, wherein the indication information carries one or more services or sessions currently carried by an aggregation port; and an aggregation group portal to which the aggregation port belongs distributes traffic according to one or more services or sessions currently carried by each aggregation port. The technical solution solves the problem in the related art that traffic of the same service cannot be ensured to be transmitted on the same aggregation link when being transmitted on a DRNI, thus effectively ensuring that the same aggregation link can be selected at both ends of the aggregation group for the same service, achieving protection at an interconnect interface.

### Brief Description of the Drawings

Drawings, provided for further understanding of the present invention and forming a part of the specification, are used to explain the present invention together with embodiments of the present invention rather than to limit the present invention. In the accompanying drawings:
Fig. 1 is a schematic diagram showing connection of network interconnection nodes according to related technology;
Fig. 2 is a flowchart of a method for traffic path negotiation in a link aggregation group according to an embodiment of the present invention;
Fig. 3 is a schematic networking diagram according to an example embodiment of the present invention;
Fig. 4 is a schematic networking diagram when an aggregation link 1 has a fault according to an example embodiment of the present invention;
Fig. 5 is a structure block diagram of a device for traffic path negotiation in a link aggregation group according to an embodiment of the present invention; and
Fig. 6 is a structure block diagram of a device for traffic path negotiation in a link aggregation group according to an example embodiment of the present invention.

### Detailed Description of the Embodiments

The present invention is described below with reference to the drawings and embodiments in detail. It should be noted that the embodiments of the present application and the characteristics of the embodiments may be combined with each other if there is no conflict.

Fig. 2 is a flowchart of a method for traffic path negotiation in a link aggregation group according to an embodiment of the present invention. As shown in Fig. 2, the method includes the following processing steps:
step S202: acquiring, by an aggregation port, indication information, and determining one or more services or sessions currently carried by the aggregation port, wherein the indication information carries one or more services or sessions currently carried by an aggregation port; and
step S204: distributing, by an aggregation group portal to which the aggregation port belongs, traffic according to one or more services or sessions currently carried by each aggregation port.

In the related art, traffic of the same service cannot be ensured to be transmitted on the same aggregation link when being transmitted on a DRNI. By adopting the method as shown in Fig. 2, an aggregation port acquires indication information, and determines one or more services or sessions currently carried by the aggregation port, wherein the indication information carries one or more services or sessions currently carried by an aggregation port; and an aggregation group portal to which the aggregation port belongs distributes traffic according to one or more services or sessions currently carried by each aggregation port. In this way, the problem in the related art that traffic of the same service cannot be ensured to be transmitted on the same aggregation link when being transmitted on a DRNI is solved, thus effectively ensuring that the same aggregation link can be selected at both ends of the aggregation group for the same service, achieving protection at an interconnect interface.

During an example implementation process, the above-mentioned indication information may be but is not limited to: a TLV field. The above-mentioned indication information may be carried in an LACP message.

In an example embodiment, with regard to protection, a packet switching network is needed to be able to simulate time division multiplexing (TDM) to achieve point-to-point service protection; and with regard to failover, it is desired to reduce services affected thereby as far as possible. Therefore, the embodiment of the present invention provides a practical and effective manner based on a link aggregation control protocol (LACP) to ensure that the same service can be carried in the same path in both directions when being transmitted on the DRNI. In order to achieve protection of a network interconnection area, the technical solution provided by the embodiment of the present invention can provide, based on an LACP protocol specified in 802.1AX standard, a method for two ends of an aggregation group to perform service distribution negotiation so as to ensure that the same service is transmitted in the same path of the aggregation link group in both directions, that is, the same aggregation link is selected for the traffic of the same service, thus achieving the requirements of protection.

In an example embodiment, a new service negotiation TLV field is defined in an extension LACP protocol, and the service negotiation TLV field carries one or more services carried by each aggregation port, i.e. a service carrying table.

According to the invention, in step S202, determining the one or more services or sessions currently carried by the aggregation port includes the following processing: modifying or setting the one or more services or sessions currently carried by the aggregation port according to a predefined policy.

During an example implementation process, in an aggregation group portal, each service or session corresponds to one aggregation port sequence.

In an example embodiment, according to the aggregation port sequence corresponding to each service or session in the aggregation group portal, at least one of the following is generated:
(1) one or more services or sessions to be carried by the aggregation port; and
(2) one or more service or sessions currently carried by the aggregation port.

In an example embodiment, the above-mentioned aggregation port sequence may be obtained by sorting according to a priority of carrying the service or session.

In an example embodiment, two ends or one end of the aggregation group have/has a service allocation port table of its own; and different services may correspond to multiple aggregation links, and the multiple aggregation links may be sorted according to a priority of service distribution.

In an example embodiment, the one or more services or sessions to be carried by the aggregation port are formed by collecting, based on all aggregation port sequences, each service or session whose aggregation port sequence takes this aggregation port as an aggregation port having a highest priority of distributing the service or session.

In an example embodiment, the service carrying table of each port is acquired according to the service allocation port table. The service carrying table is acquired according to the first priority port (i.e. a port having the highest priority) in the service allocation port table.

According to the invention, modifying, by the above-mentioned aggregation port, the one or more services or sessions currently carried by the aggregation port according to the predefined policy includes one of the following steps:
step S1: in a case where the one or more services or sessions currently carried are inconsistent with the one or more services or sessions in the indication information, making a comparison, by the aggregation port, with a priority of an aggregation group portal to which an aggregation port of an opposite end belongs, based on a priority relationship of an aggregation group portal to which the aggregation port belongs to determine whether the one or more services or sessions currently carried by the aggregation port need to be modified; or
step S2: judging, by the aggregation port, whether the one or more services or sessions currently carried by the aggregation port need to be modified according to the received indication information, based on a master/slave relationship of the aggregation group portal to which the aggregation port belongs.

In an example embodiment, judging, by the aggregation port, whether the one or more services or sessions currently carried by the aggregation port need to be modified according to the received indication information based on the priority relationship of the aggregation group portal to which the aggregation port belongs in the above-mentioned step S1, or in step S2,, based on a master/slave relationship of the aggregation group portal to which the aggregation port belongs may include the following step: when the priority of the aggregation group portal to which the aggregation port belongs is lower than that of the aggregation group portal to which the aggregation port of the opposite end belongs, or the aggregation group portal to which the aggregation port belongs is slave to the aggregation group portal to which the aggregation port of the opposite end belongs, then modifying, by the aggregation port, the one or more services or sessions currently carried by the aggregation port according to the received indication information.

In an example embodiment, after receiving an LACP message carrying a service negotiation TLV, if the local end also has a service carrying table, then the aggregation port compares the received service carrying table with the service carrying table of the local end. According to a predefined policy, such as a priority of a system or a master/slave relationship of the system, whether to modify the service carrying table of the local end according to information of the service negotiation TLV is determined so that two ends of the same aggregation link can acquire the same service carrying table by negotiation.

According to the invention, setting, by the above-mentioned aggregation port, the one or more services or sessions currently carried by the aggregation port according to the predefined policy may include the following processing: when the aggregation port does not form the one or more services or sessions currently carried by the aggregation port or content of the currently carried service or session is null, then setting, by the aggregation port, the one or more services or sessions currently carried by the aggregation port according to the received indication information.

In an example embodiment, if the local end does not have a service carrying table, then a service carrying table of the local end is constructed according to the received service negotiation TLV field

In an example embodiment, the above-mentioned method may further include: when an aggregation link corresponding to the aggregation port has a fault or is unavailable, or, is separated from an aggregation link group, triggering one or more other aggregation ports apart from the aggregation port in the link aggregation group to modify its/their currently carried services or sessions.

In an example embodiment, traffic of the one or more services or sessions originally carried by the aggregation port is carried by one or more other available aggregation ports apart from the aggregation port.

During an example implementation process, the aggregation group portal to which the aggregation port belongs searches for an aggregation port having a second highest priority in each aggregation port sequence corresponding to the one or more services or sessions currently carried by the aggregation port, and triggers one or more found aggregation ports having the second highest priority to modify its/their currently carried services or sessions.

During an example implementation process, the aggregation port having the second highest priority is an available or a master aggregation port in the aggregation group portal.

In an example embodiment, the aggregation group portal to which the aggregation port belongs searching for the aggregation port having the second highest priority in each aggregation port sequence corresponding to the one or more services or sessions currently carried by the aggregation port, and triggering the one or more found aggregation ports having the second highest priority to modify its/their currently carried services or sessions may include operations as follows:
step S3: sending, by the aggregation port having the second highest priority, modified indication information, wherein the aggregation port of the opposite end modifies or sets, according to the modified indication information, the one or more services or sessions currently carried by the aggregation port of the opposite end according to the predefined policy; and
step S4: receiving, by the aggregation port having the second highest priority, indication information re-sent from the aggregation port of the opposite end to perform renegotiation.

In an example embodiment, when a certain aggregation link is unavailable, for example, the aggregation link has a fault or the aggregation link is separated from the aggregation link group, one or more services carried by the aggregation link need to switch from the aggregation link to other aggregation links. The service allocation port table is searched again according to the one or more services carried by the unavailable aggregation link to obtain one or more ports having the second priority, a change of the service carrying table is triggered on the port and negotiation of the services on the one or more ports having the second priority is performed again via the service negotiation TLV of the LACP protocol, and the corresponding one or more services are switched to their respective second priority ports for transmission after the negotiation is successful.

In an example embodiment, the above-mentioned method may further include: when the aggregation link corresponding to one or more aggregation ports returns to service or re-joins the aggregation link group, if a protection mode of the aggregation group portal is a Revertive mode, then triggering each aggregation port in the aggregation group portal to adjust their respective one or more services or sessions carried.

In an example embodiment, after triggering each aggregation port in the aggregation group portal to adjust their respective one or more services or sessions carried, the method may further include the following processing: sending, by the aggregation port, indication information carrying one or more carried service or session after adjustment.

In an example embodiment, when the aggregation link restores or when the aggregation link re-joins the aggregation link group, if the protection mode is a Revertive mode, then the service carrying table on the affected aggregation port is triggered to change, so as to perform negotiation again via the service negotiation TLV field of the LACP protocol, and switch the one or more services to the restored link after the negotiation is successful. If the protection mode is a Non-revertive mode, then the service carrying table on the aggregation port may not be triggered to change.

In an example embodiment, the above-mentioned method further includes: when an aggregation link corresponding to the aggregation port has a fault or is unavailable, or, is separated from the aggregation link group, triggering the aggregation group portal to which the aggregation port belongs to adjust the aggregation port sequence corresponding to each service or session; and re-acquiring, by the aggregation group portal to which the aggregation port belongs, one or more services or sessions carried by respective aggregation ports according to the adjusted aggregation port sequence corresponding to each service or session.

In an example embodiment, the above-mentioned method may further include the following operations:
step S5: sending, by an aggregation port which carries a service or session of the aggregation port, the modified indication information, wherein the aggregation port of the opposite end modifies or sets, according to the modified indication information, the one or more services or sessions currently carried by the aggregation port of the opposite end according to the predefined policy; and
step S6: receiving, by an aggregation port which carries a service or session of the aggregation port, the indication information re-sent from the aggregation port of the opposite end to perform renegotiation.

In an example embodiment, when a certain aggregation link is unavailable, for example, the aggregation link has a fault or the aggregation link is separated from the aggregation link group, the service allocation port table is triggered to be modified, and a port sequence of the corresponding service allocation port table is adjusted according to the change of the aggregation port. The change of the service allocation port table triggers the change of the service carrying table of each port, and once the service carrying table changes, contents carrying the service negotiation TLV field in the LACP protocol need to be adjusted to perform negotiation again.

In an example embodiment, the above-mentioned method may further include the following processing: when the aggregation link corresponding to one or more aggregation ports returns to service or re-joins the aggregation link group, if a protection mode of the aggregation group portal is a Revertive mode, then triggering the aggregation group portal to re-adjust the aggregation port sequence.

In an example embodiment, triggering the aggregation group portal to adjust the aggregation port sequence may include the following processing: triggering the adjustment of the one or more services or sessions currently carried by the aggregation port.

In an example embodiment, the above-mentioned method may include: when an aggregation link corresponding to one or more aggregation ports joins the aggregation link group, triggering modification of a service aggregation port sequence.

In an example embodiment, when the aggregation link restores or when the aggregation link re-joins the aggregation link group, if the protection mode is a Revertive mode, then the port sequence regarding the aggregation link re-joins the service allocation port table, and since the change of the service allocation port table triggers the change of the service carrying table of the aggregation port, negotiation is performed again via including the contents of the service negotiation TLV field in the LACP protocol. If the protection mode is a Non-revertive mode, then the service carrying table on the aggregation port may not be triggered to change.

During an example implementation process, a failed aggregation link may be detected via connectivity fault management (referred to as CFM) mechanism, and the aggregation port sequence corresponding to each service or session sent on this aggregation link is searched, and an aggregation port sending the each service or session is re-determined.

In an example embodiment, if it is detected via the CFM mechanism that certain service traffic is blocked, and the service has a fault, then a second priority port may be acquired by searching in a service allocation port table corresponding to the service, and an affected port sends an LACP carrying the service negotiation TLV field to negotiate the changed service.

It should be noted that the negotiation involved in the technical solution provided in the embodiments of the present invention not only may be negotiation of a service in a message, such as a custom virtual local area network identification (referred to as C-VID), a service virtual local area network identification (referred to as S-VID), a backbone virtual local area network identification (referred to as B-VID) and a backbone service instance identification (referred to as I-SID); but also may be negotiation of a stream identification or a session identification predefined by two ends, wherein the stream identification or session identification is a definition of one type of data streams, and the type of data streams may be a group of media access control (MAC) pairs in which destination MACs are the same as source MACs, and may also be a group of Internet protocol (IP) pairs in which destination IPs are the same as source IPs, and may also be the C-VID, the S-VID, the B-VID and the I-SID in the above-mentioned service negotiation.

The above-mentioned example implementation process is further described below with reference to several example embodiments.

### Example embodiment I

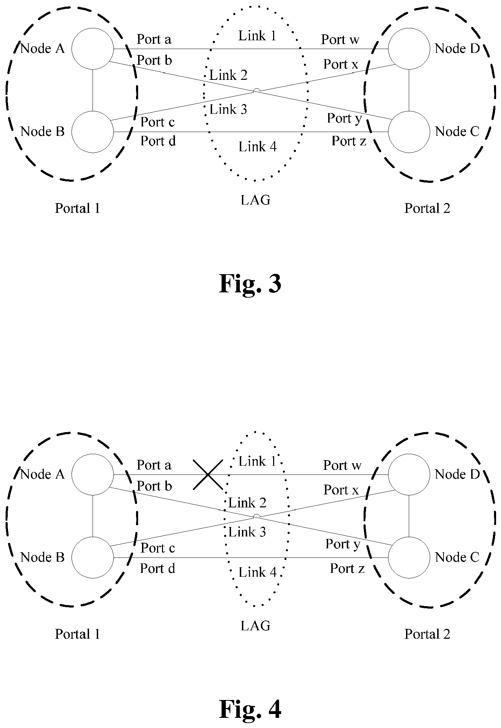

Fig. 3 is a schematic networking diagram according to an example embodiment of the present invention. As shown in Fig. 3, two ends of one aggregation group are respectively composed of two nodes, wherein portal 1 is composed of system A and system B, and portal 2 is composed of system C and system D. Port a, port b, port c and port d of portal 1 participate in an aggregation; and port x, port y, port z and port w of portal 2 participate in the aggregation. Port a and port w are interconnected to form aggregation link 1; port b and port y are interconnected to form aggregation link 2; port c and port x are interconnected to form aggregation link 3; port d and port z are interconnected to form aggregation link 4. Aggregation link 1, aggregation link 2, and aggregation link 3 and aggregation link 4 form one aggregation group. System A and system B in portal 1 obtain a service allocation port table after negotiation. Table 1 is the service allocation port table of portal 1, as shown in table 1,

**Table 1**

| **Service** | **Port Sequence** |
|---|---|
| **001** | **port a, port b, port c, port d** |
| **002** | **port b, port c, port d, port a** |
| **003** | **port c, port a, port b** |
| **...** | **...** |

System C and system D in port 2 obtain a service allocation port table after negotiation. Table 2 is the service allocation port table of port 2, as shown in table 2,

**Table 2**

| **Service** | **Port Sequence** |
|---|---|
| **001** | **port x, port z, port y, port w** |
| **002** | **port w, port x, port y, port z** |
| **003** | **port z, port w, port x, port y** |
| **...** | **...** |

Each entry in the above-mentioned service allocation port table may be represented by a group of variable identifications:
Aggregator_Vlan_XXXXXX_Admin_Port.

By parsing the variable identification Aggregator_Vlan_XXXXXX_Admin_Port, each port may acquire services to be carried by the port itself and put same in the variable Port_Admin_Vlan_List. Each aggregation port has its own service carrying table, the service carrying table may be identified by a port variable Port_Oper_Vlan_List, and an extended service negotiation TLV field in an LACP message carries the value in the Port_Oper_Vlan_List. An initial value of the Port_Oper_Vlan_List is the Port_Admin_Vlan_List.

Port a and port w are taken as an example below, and table 3 is a service carrying table of the aggregation port a, as shown in table 3,

**Table 3**

| **Carried Service** |
|---|
| **001, 005, 009, 013, 017, ...** |

Table 4 is a service carrying table of the aggregation port w, as shown in table 4,

**Table 4**

| **Carried Service** |
|---|
| **002, 005, 010, 015, 017, ...** |

A service negotiation TLV field in an LACP protocol message carries service carrying table information corresponding to the aggregation port sending the message. Therefore, the LACP protocol messages sent from port a and port w respectively carries a service negotiation TLV, and formats of the TLV are respectively as shown in table 5 and table 6. Table 5 is information carried in the service negotiation TLV field in the LACP message sent by port a, as shown in table 5,

**Table 5**

| |
|---|
| **TLV_Type = Service information** |
| **Service_Information_Length** |
| **Service1 = 001** |
| **Service2 = 005** |
| **Service3 = 009** |
| ... |
| **End TLV** |

Table 6 is information carried in the service negotiation TLV field in the LACP message sent by port w, as shown in table 6,

**Table 6**

| |
|---|
| **TLV_Type = Service information** |
| **Service_Information_Length** |
| **Service1 = 002** |
| **Service2 = 005** |
| **Service3 = 010** |
| **...** |
| **End TLV** |

It can be seen from table 5 and table 6, services originally carried by port a and port w at two ends of the aggregation link are different, and at this moment, negotiation of the two parties is needed, which can be based on a predefined policy, for example, based on a system priority, system ID and a master/slave relationship of the two ends of an aggregation group. In the example embodiment, it is assumed that a system priority of portal 1 is higher than a system priority of portal 2, or portal 1 is a master device end and portal 2 is a slave device end, and therefore port w of portal 2 is subject to services carried by port a of portal 1 and thus modifies its own service carrying table Port_Oper_Vlan_List. After negotiation via the LACP, the service carrying table of port w is changed into table 7.

Table 7 is a service carrying table of the port w after negotiation, as shown in table 7,

**Table 7**

| **Carried Service** |
|---|
| **001, 005, 009, 013, 017, ...** |

At this moment, the information carried in the service negotiation TLV field in the LACP message sent by port w is table 8.

Table 8 is information carried in the service negotiation TLV field in the LACP message sent by port w after negotiation, as shown in Table 8,

**Table 8**

| |
|---|
| **TLV_Type = Service information** |
| **Service_Information_Length** |
| **Service1 = 001** |
| **Service2 = 005** |
| **Service2 = 009** |
| **...** |
| **End TLV** |

When information carried in the service negotiation TLV field in the LACP message received by an aggregation port is consistent with contents of its own service carrying table, it means that the two aggregation ports reach an agreement via negotiation, the service starts to be transmitted via the aggregation link (the state of the aggregator enters a distributing state). In this way, the bidirectional traffic of the same service is ensured to be transmitted in the same path in both directions.

When one of the aggregation links therein has a fault or is separated from the aggregation group, for example, in the example embodiment, Fig. 4 is a schematic networking diagram when an aggregation link 1 has a fault according to an example embodiment of the present invention. As shown in Fig. 4, at this moment, services affected by this fault are 001, 005, 009, ... Therefore, the system needs to firstly search the service port allocation table of these services, and acquires the next priority port of these services in the service port allocation table. For example, with regard to service 001, the next priority port is aggregation port b and aggregation port z, that is, with regard to aggregation port b and aggregation port z, it is necessary to add service 001 to the service carrying table of aggregation port b and aggregation port z, and therefore the service carrying tables of these ports may be modified, and service 001 is added in the service carrying tables. Service 001 is added in the service negotiation TLV in the LACP message sent by port b, and service 001 is added in the service negotiation TLV in the LACP message sent by port z. However, since port b is connected to port y, and the service carrying table of port y does not have service 001, according to a predefined policy, such as a system priority (which may also be a port priority), port y is subject to service carrying of port b. Therefore, service carrying table of port y needs to add service 001, and port z is also subject to service carrying of port d, service 001 thereof is deleted from the service carrying table of port z so as to achieve again that services sent by two ports at the same link are the same, ensuring that the same service is transmitted on the same path.

When the aggregation link 1 restores or the link re-joins the aggregation group, the service carrying table of the aggregation port a and the aggregation port w is re-established according to the service allocation port table. If the protection is in a Revertive mode, then a newly established service carrying table may trigger the service carrying table on other affected aggregation ports to change, so that negotiation is performed again via the service negotiation TLV field of the LACP protocol, and the services are switched back to the restored link after the negotiation is successful. For example, because of the restoration of the aggregation link 1, service 001 needs to return to the aggregation link 1 for transmission, then the aggregation port b and aggregation port y may also change, and service 001 is deleted in the service carrying tables of the aggregation port b and aggregation port y. If the protection mode is a Non-revertive mode, then the service carrying table on the aggregation port may not be triggered to change; or, whether to modify carried services of other aggregation ports is determined according to other policies, such as a port priority, and a new aggregation link carries service traffic listed in the service carrying table thereof.

### Example embodiment II

In the example embodiment, the networking and the service negotiation process are the same as those in the example embodiment I, which is not described again here. ,

When one of the aggregation links therein has a fault or is separated from the aggregation group, for example, in the example embodiment, it is assumed that the aggregation link 1 has a fault, as shown in Fig. 4, at this moment, modification of the service allocation port table may be triggered, and port a is to be deleted from the port sequence thereof. Table 9 is the service allocation port table modified by portal 1 after the aggregation link has a fault, as shown in table 9:

**Table 9**

| **Service** | **Port Sequence** |
|---|---|
| **001** | **port b, port c, port d** |
| **002** | **port b, port c, port d** |
| **003** | **port c, port d, port b** |
| **...** | **...** |

The change of the service allocation port table triggers the change of the service carrying table of other ports. For example, with regard to port b, service 001 needs to be added in the service carrying table thereof. Similarly, the change of the service carrying table needs to trigger the change of information carried in the service negotiation TLV field sent by port b, and at this moment, information of service 001 may be added in the service negotiation TLV field sent by port b. Table 10 is information sent by port b and carried in the service negotiation TLV field which is added with a new service, as shown in table 10,

**Table 10**

| |
|---|
| **TLV_Type = Service information** |
| **Service_Information_Length** |
| **Service1 = 001** |
| **Service2 = 002** |
| **Service2 = 014** |
| **...** |
| **End TLV** |

According to a predefined policy, after receiving information carried in the TLV field as shown in table 10, the other port y of an aggregation link 2 is subject to the added service of port b, and therefore services 001 and 002 are also added in the service carrying table of port y. After port b and port y are consistent via negotiation (it is assumed that the service carrying tables of port b and port y are both as shown in table 11), traffic of services 001 and 002 may be switched to the aggregation link 2 for subsequent transmission, so as to achieve switching protection, and ensure that the same service is transmitted in the same path in both directions. Table 11 is a service carrying table after port b and port y are consistent via negotiation, as shown in table 11,

**Table 11**

| **Carried Service** |
|---|
| **001, 002, 014, 025, 037, ...** |

In addition, in the example embodiment, a certain example manner may also be adopted. When a service carrying table changes, it is unnecessary to re-transmit a new service carrying table thereof again, and it is only needed to transmit a service to be added or a service to be deleted once. For example, service 001 is added in port b. Table 12 is information carried in an optimized service negotiation TLV field, as shown in table 12:

**Table 12**

| |
|---|
| **TLV_Type = Service information** |
| **Service_Information_Length** |
| **Indication = 1** |
| **Service1 = 001** |
| **...** |
| **End TLV** |

Herein, if the Indication **=** 1, it means that this TLV is a TLV indicating the service to be added; and if the Indication **=** 2, then it means that service information received is a service to be removed from the port.

When this fault of link 1 is restored, the link 1 re-joins the above-mentioned aggregation group. According to a predefined algorithm of the system, traffic may be re-allocated. If the protection mode is a Revertive mode, after re-computing, the service allocation port table of portal 1 may be restored to a state before this fault, i.e. as shown in table 1. At this moment, the service allocation table has changed, which may trigger service carrying tables of other ports to change. For example, port a re-establishes a service carrying table of its own according to the service allocation table, at this moment, the service carrying table of port a is restored to a state before this fault, as shown in table 3. Port b may also be restored to a state before this fault, at this moment, port b needs to delete the originally carried service 001 from the service carrying table of its own. At this moment, service negotiation TLV formats in an LACP protocol message sent by port a are as shown in table 5. Table 13 is optimized service negotiation TLV formats in an LACP protocol message sent by the port b, as shown in table 13:

**Table 13**

| |
|---|
| **TLV_Type = Service information** |
| **Service_Information_Length** |
| **Indication = 2** |
| **Service1 = 001** |
| **...** |
| **End TLV** |

If the protection mode is a Non-revertive mode, then a newly added link only serves as a standby link and is added in a current service allocation port table (as shown in table 9), and does not affect forwarding of any traffic currently. For example, with regard to portal 1, table 14 is a new service allocation port table of port 1 after this fault is restored, as shown in table 14:

**Table 14**

| **Service** | **Port Sequence** |
|---|---|
| **001** | **port b, port c, port d, port a** |
| **002** | **port b, port c, port d, port a** |
| **003** | **port c, port d, port b, port a** |
| **...** | **...** |

At this moment, no effect may be introduced to the service carrying table of the port, unless a fault occurs again or there is a link being removed from the aggregation group.

### Example embodiment III

In the example embodiment, the networking and service negotiation process are the same as those in the example embodiment I, which is not described again here.

When a device starts a CFM to perform fault detection on a service, if it is detected that a certain service/certain services has a fault, then a service allocation port table corresponding to the service is searched to find a second priority port, and the LACP carries the service negotiation TLV field on one or more affected ports to negotiate the changed service. For example, with regard to service 001, it is detected that a fault occurs thereon via the CFM, portal 1 searches service allocation port table (as described in table 1) thereof to find a second priority port b and modify the service carrying table of port b to add service 001 in the table; then service negotiation TLV formats in the LACP protocol message sent by port b are as shown in table 12.

According to a negotiation policy, port y on the portal 2 is subject to port b, and thus also adds service 001 in the service carrying table thereof. In this way, port y and port b are consistent via negotiation, so as to successfully switch service 001 to the aggregation link 2 for transmission.

When the CFM corresponding to service 001 is restored on the aggregation link 1, if the protection mode is a Revertive mode, then the service carrying tables of port a and port b are triggered to re-negotiate the services to be transmitted on the aggregation link 1. If the protection mode is a Non-revertive mode, then the modification of service carrying tables of port a and port b is not triggered, and the transmission path of the services remains unchanged.

### Example embodiment IV

The example embodiment is similar to the above-mentioned example embodiment I, and the differences lie in that port 1 and port 2 in the above-mentioned example embodiment I have their own service port allocation table, and can generate service carrying table of each aggregation port of their own, so as to send a service negotiation TLV field according to the generated service carrying table to finally reach an agreement via the negotiation of two ends.

In the present example embodiment, only one end is configured with its own service port allocation table. It is assumed that only portal 1 has its own service port allocation table, as shown in table 1. Therefore, each aggregation port of portal 1 may generate its own service carrying table according the service port allocation table. For example, it is assumed that the service carrying table of port a is as shown in table 3, information carried in the service negotiation TLV field in the LACP message sent by port a is as shown in table 5.

After receiving the service negotiation TLV field sent from port a, since the port w in portal 2 connected to port a does not have a service carrying table of its own, and thus a service carrying table of the port w may be constructed according to the received service negotiation TLV field of the opposite end. The service carrying table of port w may keep consistent with the service carrying table of port a. When all the aggregation ports of portal 2, such as port w, port x, port y and port z, establish their own service carrying tables, the portal 2 constructs its own service port allocation table according to the service carrying table of each port. Once each port constructs its own service carrying table, information about its own service carrying table also starts to be transmitted via the service negotiation TLV field, so that two ends can always keep consistency of service transmission, and keep the same service being transmitted in the same path in both directions.

### Embodiment V

The example embodiment differs from the above-mentioned various example embodiments in that the present example embodiment is based on the identification of a stream, which is identified as stream id herein. It is assumed that certain data streams are pre-defined and identified, and table 15 shows definitions of stream identifications or session identifications, as shown in table 15:

**Table 15**

| **Stream ID** | **MAC address pair** | **C-VID** |
|---|---|---|
| **000001** | **{01-03-05-07-09-0B, 02-04-06-08-0A-0C}** | **100** |
| **000002** | **{00-01-02-03-04-05, 06-07-08-09-0A-0B}** | **200** |
| **000003** | **{02-05-08-0B-0F-00, 03-07-0A-0D-10-13}** | **300** |
| **000004** | **{0F-0E-0D-0C-0B-0A, 09-08-07-06-05-04}** | **400** |
| **000005** | **...** | **...** |

Herein, the steam identification or session identification need to be defined via negotiation by two parties of the aggregation group, i.e. the same type of data streams have the same stream identification (Stream ID) or session identification. At this moment, a TLV field of stream identification or session identification is interacted between aggregation ports instead of the service negotiation TLV field. It is assumed that at portal 1, table 16 is a stream port correspondence table of portal 1, and a relationship between the aggregation port and the stream is as shown in table 16:

**Table 16**

| **Stream ID** | **Port Sequence** |
|---|---|
| **000001** | **port a, port b, port c, port d** |
| **000002** | **port b, port c, port d, port a** |
| **000003** | **port c, port d, port a, port b** |
| **000004** | **port d, port a, port b, port c** |
| **...** | **...** |

Table 17 is a stream port correspondence table of portal 2 at portal 2, and a relationship between the aggregation port and the stream is as shown in table 17:

**Table 17**

| **Stream ID** | **Port Sequence** |
|---|---|
| **000001** | **port x, port z, port y, port w** |
| **000002** | **port w, port x, port y, port z** |
| **000003** | **port z, port w, port x, port y** |
| **000004** | **port y, port z, port x, port y** |
| **...** | **...** |

In the example embodiment, each entry in the corresponding table of the traffic port may be identified by a group of variables:
Aggregator_Stream_XXXXXX_Admin_Port.

By parsing the above-mentioned variable identifier Aggregator_Stream_XXXXXX_Admin_Port, each port acquires data streams to be carried by the port itself and put same in the variable Port_Admin_Stream_List.

Each aggregation port has a data stream carrying table of its own, the data stream carrying table may be identified by a port variable Port_Oper_Stream_List, and an extended TLV field of the stream identification or session identification in an LACP message carries the value in the Port_Oper_Stream_List. An initial value of the Port_Oper_Stream_List is equal to the Port_Admin_Stream_List.

Herein, port a and port w are taken as an example below, and table 18 is a data stream carrying table of the aggregation port a, as shown in table 18:

**Table 18**

| **Carried Data Stream** |
|---|
| **000001, 000005, 000009, 000013, 000017, ...** |

Table 19 is a service carrying table of the aggregation port w, as shown in table 19:

**Table 19**

| **Carried Data Stream** |
|---|
| **000002, 000005, 000010, 000015, 000017, ...** |

A TLV field of the stream identification or session identification in an LACP protocol message carries data stream carrying table information corresponding to the aggregation port sending the message. Therefore, the LACP protocol messages sent by port a and port w respectively carries a TLV of the stream identification or session identification, formats of the TLV are as shown in table 20 and table 21 respectively. Table 20 is information carried in the TLV field of the stream identification or session identification in the LACP message sent by port a, as shown in table 20:

**Table 20**

| |
|---|
| **TLV_Type = Stream ID** |
| **Stream_number_Length** |
| **Stream ID1 = 000001** |
| **Stream ID2 = 000005** |
| **Stream ID3 = 000009** |
| **...** |
| **End TLV** |

Table 21 is information carried in the TLV field of the stream identification or session identification in the LACP message sent by port w, as shown in table 21:

**Table 21**

| |
|---|
| **TLV_Type = Stream ID** |
| **Stream_number_Length** |
| **Service1 = 002** |
| **Service2 = 005** |
| **Service2 = 010** |
| **...** |
| **End TLV** |

It can be seen from table 20 and table 21, data streams originally carried by port a and port w at two ends of the aggregation link are different, and at this moment, negotiation of the two parties is needed. According to a predefined policy, for example, according to a system priority, it is assumed herein that a system priority of portal 1 is higher than a system priority of portal 2, and therefore port w needs to be subject to data streams carried by port a to modify its own data stream carrying table Port_Oper_Stream_List. After the negotiation via the LACP, the data stream carrying table of port w is changed as shown in table 22. Table 22 is a service carrying table of the port w after negotiation, as shown in table 22:

**Table 22**

| **Carried Service** |
|---|
| **000001, 000005, 000009, 000013, 000017, ...** |

At this moment, table 23 is information carried in the TLV field of the stream identification or session identification in the LACP message sent by port w after negotiation, as shown in table 23:

**Table 23**

| |
|---|
| **TLV_Type = Service information** |
| **Service_Information_Length** |
| **Service1 = 000001** |
| **Service2 = 000005** |
| **Service2 = 000009** |
| **...** |
| **End TLV** |

When information carried in the TLV field of the stream identification or session identification in the LACP message received by an aggregation port is consistent with contents of its own stream port correspondence table (Port_Oper_Stream_List), it means that the two aggregation ports reach an agreement via negotiation, the service starts to be transmitted via the aggregation link (the state of the aggregator enters a distributing state). In this way, the bidirectional traffic of the same service is ensured to be transmitted in the same path in both directions.

When an aggregation link has a fault or is separated from an aggregation group, the operation process thereof is similar to that of the above-mentioned various example embodiments, with the service identification merely being changed into a stream identification or a session identification, which is not described again here.

It should be noted that using a stream identification or a session identification to perform distribution of messages and negotiation of the same path may be used for identifying traffic of the same session, so as to reduce a granularity of identifying different traffics, and to make the aggregation group more even in a load balancing aspect.

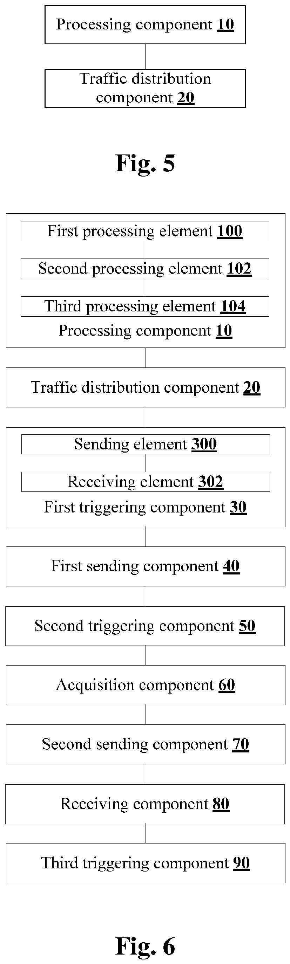

Fig. 5 is a structure block diagram of a device for traffic path negotiation in a link aggregation group according to an embodiment of the present invention. As shown in Fig. 5, the device for traffic path negotiation in the link aggregation group may include: a processing component **10**, configured to acquire indication information, and determine one or more services or sessions currently carried by an aggregation port, wherein the indication information carries one or more services or sessions currently carried by an aggregation port; and traffic distribution component **20**, configured to distribute traffic according to one or more services or sessions currently carried by each aggregation port.

By adopting the device as shown in Fig. 5, the problem in the related art that traffic of the same service cannot be ensured to be transmitted on the same aggregation link when being transmitted on a DRNI is solved, thus effectively ensuring that the same aggregation link can be selected at both ends of the aggregation group for the same service, achieving protection at an interconnect interface.

During an example implementation process, the above-mentioned indication information may be but is not limited to: a TLV field. The above-mentioned indication information may be carried in an LACP message.

According to the invention, the above-mentioned processing component **10** is configured to modify or set the one or more services or sessions currently carried by the aggregation port according to a predefined policy.

In an example embodiment, in an aggregation group portal, each service or session corresponds to one aggregation port sequence.

In an example embodiment, the above-mentioned processing component **10** is configured to generate, according to the aggregation port sequence corresponding to each service or session in the aggregation group portal, one or more services or sessions to be carried by the aggregation port, and/or, the one or more services or sessions currently carried by the aggregation port.

In an example embodiment, the aggregation port sequence may be sorted according to a priority of carrying the service or session.

In an example embodiment, the one or more services or sessions to be carried by the aggregation port are formed by collecting, based on all aggregation port sequences, each service or session whose aggregation port sequence takes this aggregation port as an aggregation port having a highest priority of distributing the service or session.

According to the invention, as shown in Fig. 6, the above-mentioned processing component **10** includes one of the following: a first processing element **100**, configured to, in a case where the one or more services or sessions currently carried are inconsistent with the one or more services or sessions in the indication information, make a comparison with a priority of an aggregation group portal to which an aggregation port of the opposite end belongs based on a priority relationship of the aggregation group portal to which the aggregation port belongs to determine whether the one or more services or sessions currently carried by the aggregation port need to be modified; or, a second processing element **102**, configured to judge whether the one or more services or sessions currently carried by the aggregation port need to be modified according to the received indication information, based on a master/slave relationship of the aggregation group portal to which the aggregation port belongs.

In an example embodiment, the above-mentioned first processing element **100** is configured to modify, when the priority of the aggregation group portal to which the aggregation port belongs is lower than that of the aggregation group portal to which the aggregation port of the opposite end belongs, the one or more services or sessions currently carried by the aggregation port according to the received indication information, or, the second processing element **102** is configured to the first processing element is configured to modify, when the aggregation group portal to which the aggregation port belongs is slave to the aggregation group portal to which the aggregation port of the opposite end belongs, the one or more services or sessions currently carried by the aggregation port according to the received indication information.

According to the invention, as shown in Fig. 6, the above-mentioned processing component **10** further includes: a third processing element **104**, configured to set, when the aggregation port does not form the one or more services or sessions currently carried by the aggregation port or content of the currently carried service or session is null, the one or more services or sessions currently carried by the aggregation port according to the received indication information.

In an example embodiment, as shown in Fig. 6, the above-mentioned device further includes: a first triggering component **30**, configured to trigger, when an aggregation link corresponding to the aggregation port has a fault or is unavailable, or, is separated from an aggregation link group, one or more other aggregation ports apart from the aggregation port in a link aggregation group to modify its/their currently carried services or sessions.

In an example embodiment, traffic of the one or more services or sessions originally carried by the aggregation port is carried by one or more other available aggregation ports apart from the aggregation port.

In an example embodiment, the above-mentioned first triggering component **30** is configured to search for an aggregation port having a second highest priority in each aggregation port sequence corresponding to the one or more services or sessions currently carried by the aggregation port, and trigger one or more found aggregation ports having the second highest priority to modify its/their currently carried services or sessions.

In an example embodiment, the aggregation port having the second highest priority is an available or a master aggregation port in the aggregation group portal.

In an example embodiment, as shown in Fig. 6, the above-mentioned first triggering component **30** includes: a sending element **300**, configured to send the modified indication information, wherein the aggregation port of the opposite end modifies or sets, according to the modified indication information, one or more services or sessions currently carried by the aggregation port of the opposite end according to the predefined policy; and a receiving element **302**, configured to receive the indication information re-sent from the aggregation port of the opposite end to perform renegotiation.

In an example embodiment, the above-mentioned first triggering component **30** is further configured to trigger, when the aggregation link corresponding to one or more aggregation ports returns to service or re-joins the aggregation link group, if a protection mode of the aggregation group portal is a Revertive mode, each aggregation port in the aggregation group portal to adjust their respective one or more services or sessions carried.

In an example embodiment, as shown in Fig. 6, the above-mentioned device further includes: a first sending component **40**, configured to send indication information carrying one or more carried service or session after adjustment.

In an example embodiment, as shown in Fig. 6, the above-mentioned device further includes: a second triggering component **50**, configured to trigger, when an aggregation link corresponding to the aggregation port has a fault or is unavailable, or, is separated from the aggregation link group, the aggregation group portal to which the aggregation port belongs to adjust an aggregation port sequence corresponding to each service or session; and an acquisition component **60**, configured to re-acquire one or more services or sessions carried by respective aggregation ports according to the adjusted aggregation port sequence corresponding to each service or session.

In an example embodiment, as shown in Fig. 6, the above-mentioned device further includes: a second sending component **70**, configured to send modified indication information, wherein an aggregation port of the opposite end modifies or sets, according to the modified indication information, one or more services or sessions currently carried by the aggregation port of the opposite end according to the predefined policy; and a receiving component **80**, configured to receive the indication information re-sent from the aggregation port of the opposite end to perform renegotiation.

In an example embodiment, the above-mentioned second triggering component **50** is further configured to trigger, when the aggregation link corresponding to one or more aggregation ports returns to service or re-joins the aggregation link group, if a protection mode of the aggregation group portal is a Revertive mode, the aggregation group portal to re-adjust the aggregation port sequence.

In an example embodiment, as shown in Fig. 6, the above-mentioned device further includes: a third triggering component **90**, configured to trigger, when an aggregation link corresponding to one or more aggregation ports joins the aggregation link group, modification of a service aggregation port sequence.

In an example embodiment, a failed aggregation link is detected via connectivity fault management (CFM) mechanism, and the aggregation port sequence corresponding to each service or session sent on this aggregation link is searched, and an aggregation port sending the each service or session is re-determined.

It should be noted that the example interacting and working manner of all the components and all the elements shown in Figs. 5 and 6 can be obtained in the example embodiments as shown in Figs. 2 to 4 and is not described again here.

It can be seen from the above description that the above-mentioned embodiments realize the following technical effects (it should be noted that these effects are effects which can be achieved by certain example embodiments): the problem in the related art that traffic of the same service cannot be ensured to be transmitted on the same aggregation link when being transmitted on a DRNI is solved, thus effectively ensuring that the same aggregation link can be selected at both ends of the aggregation group for the same service, achieving protection at an interconnect interface.

### Industrial Applicability

As stated above, a method and device for traffic path negotiation in a link aggregation group provided in the embodiments of the present invention has the following beneficial effects: being able to effectively ensure that the same aggregation link is selected for the same service on two ends of an aggregation group, achieving protection at an interconnect interface.

Obviously, those skilled in the art should know that each of the mentioned components or steps of the present application can be realized by universal computing devices; the components or steps can be focused on single computing device, or distributed on the network formed by multiple computing devices; selectively, they can be realized by the program codes which can be executed by the computing device; thereby, the components or steps can be stored in the storage device and executed by the computing device; and under some circumstances, the shown or described steps can be executed in different orders, or can be independently manufactured as each integrated circuit component, or multiple components or steps thereof can be manufactured to be single integrated circuit component, thus to be realized. In this way, the present invention is not restricted to any particular hardware and software combination.

The above description is only example embodiments of the present invention and is not intended to limit the present invention, and the present invention can have a variety of changes and modifications for those skilled in the art. Any modification, equivalent replacement, or improvement made within the principle of the present invention shall all fall within the protection scope defined by the claims of the present invention.

## Claims

1. A method for traffic path negotiation in a link aggregation group, **characterized by** comprising:
acquiring, by an aggregation port of an end of the link aggregation group, indication information, and determining one or more services or sessions currently carried by the aggregation port, wherein the indication information carries one or more services or sessions currently carried by an aggregation port of the opposite end of the link aggregation group (S202); and
distributing, by the link aggregation group, traffic according to one or more services or sessions currently carried by each of the aggregation ports in the link aggregation group (S204);
wherein determining the one or more services or sessions currently carried by the aggregation port comprises: modifying or setting the one or more services or sessions currently carried by the aggregation port according to a predefined policy;
wherein modifying, by the aggregation port, the one or more services or sessions currently carried by the aggregation port according to the predefined policy comprises:
in a case where the one or more services or sessions currently carried are inconsistent with the one or more services or sessions in the indication information, making a comparison, by the aggregation port, with a priority of an aggregation group portal to which the aggregation port belongs, based on a priority relationship of an aggregation group portal to which the aggregation port belongs to determine whether the one or more services or sessions currently carried by the aggregation port need to be modified; or, judging, by the aggregation port, whether the one or more services or sessions currently carried by the aggregation port need to be modified according to the received indication information, based on a master/slave relationship of the aggregation group portal to which the aggregation port belongs;
or,
wherein setting, by the aggregation port, the one or more services or sessions currently carried by the aggregation port according to the predefined policy comprises: when the aggregation port does not form the one or more services or sessions currently carried by the aggregation port or content of the currently carried service or session is null, then setting, by the aggregation port, the one or more services or sessions currently carried by the aggregation port according to the received indication information.

2. The method according to claim 1, **characterized in that** in an aggregation group portal, each service or session corresponds to one aggregation port sequence.

3. The method according to claim 2, **characterized in that** according to the aggregation port sequence corresponding to each service or session in the aggregation group portal, one or more services or sessions to be carried by the aggregation port, and/or, the one or more services or sessions currently carried by the aggregation port are generated.

4. The method according to claim 2, **characterized in that** the aggregation port sequence is obtained by sorting according to a priority of carrying the service or session; preferably, the one or more services or sessions to be carried by the aggregation port are formed by collecting, based on all aggregation port sequences, each service or session whose aggregation port sequence takes this aggregation port as an aggregation port having a highest priority of distributing the service or session.

5. The method according to claim 1, **characterized in that**
judging, by the aggregation port, whether the one or more services or sessions currently carried by the aggregation port need to be modified according to the received indication information based on the priority relationship of the aggregation group portal to which the aggregation port belongs, or, based on a master/slave relationship of the aggregation group portal to which the aggregation port belongs comprises:
when the priority of the aggregation group portal to which the aggregation port belongs is lower than that of the aggregation group portal to which the aggregation port of the opposite end belongs, or the aggregation group portal to which the aggregation port belongs is slave to the aggregation group portal to which the aggregation port of the opposite end belongs, then modifying, by the aggregation port, the one or more services or sessions currently carried by the aggregation port according to the received indication information.

6. The method according to claim 1, **characterized by** further comprising:
when an aggregation link corresponding to the aggregation port has a fault or is unavailable, or, is separated from an aggregation link group, triggering one or more other aggregation ports apart from the aggregation port in the link aggregation group to modify its/their currently carried services or sessions;
preferably, traffic of the one or more services or sessions originally carried by the aggregation port is carried by one or more other available aggregation ports apart from the aggregation port;
preferably, the aggregation group portal to which the aggregation port belongs searches for an aggregation port having a second highest priority in each aggregation port sequence corresponding to the one or more services or sessions currently carried by the aggregation port, and triggers one or more found aggregation ports having the second highest priority to modify its/their currently carried services or sessions;
preferably, the aggregation port having the second highest priority is an available or a master aggregation port in the aggregation group portal;
preferably, the aggregation group portal to which the aggregation port belongs searching for the aggregation port having the second highest priority in each aggregation port sequence corresponding to the one or more services or sessions currently carried by the aggregation port, and triggering the one or more found aggregation ports having the second highest priority to modify its/their currently carried services or sessions comprises:
sending, by the aggregation port having the second highest priority, modified indication information, wherein the aggregation port of the opposite end modifies or sets, according to the modified indication information, one or more services or sessions currently carried by the aggregation port of the opposite end according to the predefined policy; and
receiving, by the aggregation port having the second highest priority, indication information re-sent from the aggregation port of the opposite end to perform renegotiation;
preferably, the method further comprises:
when the aggregation link corresponding to one or more aggregation ports returns to service or re-joins the aggregation link group, if a protection mode of the aggregation group portal is a Revertive mode, then triggering each aggregation port in the aggregation group portal to adjust their respective one or more services or sessions carried;
preferably, after triggering each aggregation port in the aggregation group portal to adjust their respective one or more services or sessions carried, the method further comprises:
sending, by the aggregation port, indication information carrying one or more carried service or session after adjustment.

7. The method according to claim 1, **characterized by** further comprising:
when an aggregation link corresponding to the aggregation port has a fault or is unavailable, or, is separated from the aggregation link group, triggering an aggregation group portal to which the aggregation port belongs to adjust an aggregation port sequence corresponding to each service or session; and
re-acquiring, by the aggregation group portal to which the aggregation port belongs, one or more services or sessions carried by respective aggregation ports according to the adjusted aggregation port sequence corresponding to each service or session;
preferably, the method further comprises:
sending, by an aggregation port which carries a service or session of the aggregation port, modified indication information, wherein an aggregation port of the opposite end modifies or sets, according to the modified indication information, one or more services or sessions currently carried by the aggregation port of the opposite end according to the predefined policy; and
receiving, by the aggregation port which carries the service or session of the aggregation port, indication information re-sent from the aggregation port of the opposite end to perform renegotiation;
or preferably, the method further comprises:
when the aggregation link corresponding to one or more aggregation ports returns to service or re-joins the aggregation link group, if a protection mode of the aggregation group portal is a Revertive mode, then triggering the aggregation group portal to re-adjust the aggregation port sequence, preferably, triggering the aggregation group portal to adjust the aggregation port sequence comprises: triggering adjustment of the one or more services or sessions currently carried by the aggregation port.

8. The method according to claim 1, **characterized by** further comprising:
when an aggregation link corresponding to one or more aggregation ports joins the aggregation link group, triggering modification of a service aggregation port sequence.

9. The method according to claim 6 or 7, **characterized in that** a failed aggregation link is detected via connectivity fault management, CFM, mechanism, and the aggregation port sequence corresponding to each service or session sent on this aggregation link is searched, and an aggregation port sending the each service or session is re-determined.

10. The method according to any one of claims 1 to 9, **characterized in that** the indication information is a type length value, TLV, field; or the indication information is carried in a link aggregation control protocol, LACP, message.

11. A device for traffic path negotiation in a link aggregation group, **characterized by** comprising:
a processing component (10), configured to acquire indication information, and determine one or more services or sessions currently carried by an aggregation port of one end of the link aggregation group, wherein the indication information carries one or more services or sessions currently carried by an aggregation port of the opposite end the link aggregation group; and
traffic distribution component (20), configured to distribute traffic according to one or more services or sessions currently carried by each of aggregation ports in the link aggregation group;
wherein the processing component (10) is further configured to modify or set the one or more services or sessions currently carried by the aggregation port according to a predefined policy;
wherein the processing component (10) comprises one of the following:
a first processing element (100), configured to, in a case where the one or more services or sessions currently carried are inconsistent with the one or more services or sessions in the indication information, make a comparison with a priority of an aggregation group portal to which an aggregation port of an opposite end belongs based on a priority relationship of the aggregation group portal to which the aggregation port belongs to determine whether the one or more services or sessions currently carried by the aggregation port need to be modified; an
a second processing element (102), configured to judge whether the one or more services or sessions currently carried by the aggregation port need to be modified according to the received indication information, based on a master/slave relationship of the aggregation group portal to which the aggregation port belongs;
a third processing element (103), configured to set, when the aggregation port does not form the one or more services or sessions currently carried by the aggregation port or content of the currently carried service or session is null, the one or more services or sessions currently carried by the aggregation port according to the received indication information.

12. The device according to claim 11, **characterized in that** in an aggregation group portal, each service or session corresponds to one aggregation port sequence.

13. The device according to claim 12, **characterized in that** the processing component (10) is configured to generate, according to the aggregation port sequence corresponding to each service or session in the aggregation group portal, one or more services or sessions to be carried by the aggregation port, and/or, the one or more services or sessions currently carried by the aggregation port.

## Patentansprüche

1. Ein Verfahren zur Verkehrspfadverhandlung in einer Kanalbündelungsgruppe, **dadurch gekennzeichnet, dass** es Folgendes umfasst:
Erfassen, durch einen Bündelungsanschluss eines Endes der Kanalbündelungsgruppe, von Anzeigeinformationen, und Ermitteln eines/einer oder mehrerer Dienste oder Sitzungen, die aktuell vom Bündelungsanschluss ausgeführt werden, wobei die Anzeigeinformationen eine(n) oder mehrere Dienste oder Sitzungen ausführen, die zurzeit von einem Bündelungsanschluss des gegenüberliegenden Endes der Kanalbündelungsgruppe ausgeführt werden (S202); und
Verteilen, durch die Kanalbündelungsgruppe, von Verkehr gemäß einem/einer oder mehreren Diensten oder Sitzungen, die aktuell von jedem der Bündelungsanschlüsse in der Kanalbündelungsgruppe (S204) ausgeführt werden;
wobei das Ermitteln der einen oder mehreren Dienste oder Sitzungen, die aktuell vom Bündelungsanschluss ausgeführt werden, Folgendes umfasst: das Modifizieren oder Festlegen der einen oder mehreren Dienste oder Sitzungen, die aktuell vom Bündelungsanschluss ausgeführt werden, nach einer vordefinierten Methode;
wobei das Modifizieren, durch den Bündelungsanschluss, der einen oder mehreren Dienste oder Sitzungen, die aktuell vom Bündelungsanschluss ausgeführt werden, nach der vordefinierten Methode Folgendes umfasst:
falls die einen oder mehreren Dienste oder Sitzungen, die aktuell ausgeführt werden, mit den einen oder mehreren Diensten oder Sitzungen in den Anzeigeinformationen inkonsistent sind, das Durchführen eines Vergleichs durch den Bündelungsanschluss, mit einer Priorität eines Bündelungsgruppenportals, zu dem der Bündelungsanschluss gehört, basierend auf einem Prioritätsverhältnis eines Bündelungsgruppenportals, zu dem der Bündelungsanschluss gehört, um zu bestimmen, ob die einen oder mehreren Dienste oder Sitzungen, die aktuell vom Bündelungsanschluss ausgeführt werden, modifiziert werden müssen; oder das Beurteilen, durch den Bündelungsanschluss, ob die einen oder mehreren Dienste oder Sitzungen, die aktuell vom Bündelungsanschluss ausgeführt werden, modifiziert werden müssen, entsprechend den empfangenen Anzeigeinformationen, basierend auf einer Master-Slave-Beziehung des Bündelungsgruppenportals, zu dem der Bündelungsanschluss gehört;
oder
wobei das Festlegen, durch den Bündelungsanschluss, der einen oder mehreren Dienste oder Sitzungen, die aktuell vom Bündelungsanschluss ausgeführt werden, gemäß der vordefinierten Methode Folgendes umfasst: wenn der Bündelungsanschluss nicht die einen oder mehreren Dienste oder Sitzungen bildet, die aktuell vom Bündelungsanschluss ausgeführt werden, oder der Inhalt des aktuell ausgeführten Dienstes oder der aktuell ausgeführten Sitzung Null ist, das Festlegen, durch den Bündelungsanschluss, der einen oder mehreren Dienste oder Sitzungen, die aktuell vom Bündelungsanschluss ausgeführt werden, entsprechend den empfangenen Anzeigeinformationen.

2. Das Verfahren gemäß Anspruch 1, **dadurch gekennzeichnet, dass** in einem Bündelungsgruppenportal jeder Dienst oder jede Sitzung einer Bündelungsanschlusssequenz entspricht.

3. Das Verfahren gemäß Anspruch 2, **dadurch gekennzeichnet, dass** gemäß der Bündelungsanschlusssequenz, die jedem Dienst oder jeder Sitzung im Bündelungsgruppenportal entspricht, ein(e) oder mehrere Dienste oder Sitzungen, die vom Bündelungsanschluss ausgeführt werden sollen, und/oder die einen oder mehreren Dienste oder Sitzungen, die aktuell vom Bündelungsanschluss ausgeführt werden, erzeugt werden.

4. Das Verfahren gemäß Anspruch 2, **dadurch gekennzeichnet, dass** die Bündelungsanschlusssequenz gewonnen wird durch Sortieren entsprechend einer Priorität des Ausführens des Dienstes oder der Sitzung; vorzugsweise werden die einen oder mehreren Dienste oder Sitzungen, die vom Bündelungsanschluss ausgeführt werden sollen, gebildet durch das Sammeln, basierend auf allen Bündelungsanschlusssequenzen, jedes Dienstes oder jeder Sitzung, dessen/deren Bündelungsanschlusssequenz diesen Bündelungsanschluss als Bündelungsanschluss mit einer höchsten Priorität des Verteilens des Dienstes oder der Sitzung nimmt.

5. Das Verfahren gemäß Anspruch 1, **dadurch gekennzeichnet, dass** das Beurteilen, durch den Bündelungsanschluss, ob die einen oder mehreren Dienste oder Sitzungen, die aktuell vom Bündelungsanschluss ausgeführt werden, modifiziert werden müssen, entsprechend den empfangenen Anzeigeinformationen, basierend auf dem Prioritätsverhältnis des Bündelungsgruppenportals, zu dem der Bündelungsanschluss gehört, oder basierend auf einer Master-Slave-Beziehung des Bündelungsgruppenportals, zu dem der Bündelungsanschluss gehört, Folgendes umfasst:
wenn die Priorität des Bündelungsgruppenportals, zu dem der Bündelungsanschluss gehört, niedriger ist als diejenige des Bündelungsgruppenportals, zu dem der Bündelungsanschluss des gegenüberliegenden Endes gehört, oder das Bündelungsgruppenportal, zu dem der Bündelungsanschluss gehört, der Slave des Bündelungsgruppenportals ist, zu dem der Bündelungsanschluss des gegenüberliegenden Endes gehört;
anschließend das Modifizieren, durch den Bündelungsanschluss, der einen oder mehreren Dienste oder Sitzungen, die aktuell vom Bündelungsanschluss ausgeführt werden, entsprechend den empfangenen Anzeigeinformationen.

6. Das Verfahren gemäß Anspruch 1, **dadurch gekennzeichnet, dass** es weiter Folgendes umfasst:
wenn ein Bündelungskanal, der dem Bündelungsanschluss entspricht, einen Fehler hat oder nicht verfügbar ist oder von einer Bündelungskanalgruppe getrennt ist, Auslösen eines oder mehrerer anderer Bündelungsanschlüsse außer dem Bündelungsanschluss in der Kanalbündelungsgruppe, um seine/ihre aktuell ausgeführten Dienste oder Sitzungen zu modifizieren;
vorzugsweise wird Verkehr der einen oder mehreren Dienste oder Sitzungen, die ursprünglich vom Bündelungsanschluss ausgeführt wurden, von einem oder mehreren anderen verfügbaren Bündelungsanschlüssen außer dem Bündelungsanschluss ausgeführt;
vorzugsweise sucht das Bündelungsgruppenportal, zu dem der Bündelungsanschluss gehört, nach einem Bündelungsanschluss, der eine zweithöchste Priorität in jeder Bündelungsanschlusssequenz hat, entsprechend den einen oder mehreren Diensten oder Sitzungen, die aktuell vom Bündelungsanschluss ausgeführt werden, und löst einen oder mehrere gefundene Bündelungsanschlüsse mit der zweithöchsten Priorität zum Modifizieren seiner/ihrer aktuell ausgeführten Dienste oder Sitzungen aus;
vorzugsweise ist der Bündelungsanschluss mit der zweithöchsten Priorität ein verfügbarer oder ein Master-Bündelungsanschluss im Bündelungsgruppenportal;
vorzugsweise umfasst das Suchen, durch das Bündelungsgruppenportal, zu dem der Bündelungsanschluss gehört, nach dem Bündelungsanschluss, der die zweithöchste Priorität in jeder Bündelungsanschlusssequenz hat, entsprechend den einen oder mehreren Diensten oder Sitzungen, die aktuell vom Bündelungsanschluss ausgeführt werden, und das Auslösen des einen oder der mehreren gefundenen Bündelungsanschlüsse mit der zweithöchsten Priorität zum Modifizieren seiner/ihrer aktuell ausgeführten Dienste oder Sitzungen Folgendes:
das Senden, durch den Bündelungsanschluss mit der zweithöchsten Priorität, modifizierter Anzeigeinformationen, wobei der Bündelungsanschluss des gegenüberliegenden Endes entsprechend den modifizierten Anzeigeinformationen eine(n) oder mehrere Dienste oder Sitzungen modifiziert oder festlegt, die aktuell vom Bündelungsanschluss des gegenüberliegenden Endes ausgeführt werden, nach der vordefinierten Methode; und
das Empfangen, durch den Bündelungsanschluss mit der zweithöchsten Priorität, von Anzeigeinformationen, die vom Bündelungsanschluss des gegenüberliegenden Endes erneut gesendet werden, um eine Neuverhandlung durchzuführen;
vorzugsweise umfasst das Verfahren weiter Folgendes:
wenn der Bündelungskanal, der einem oder mehreren Bündelungsanschlüssen entspricht, zum Dienst zurückkehrt oder erneut Teil der Bündelungskanalgruppe wird, wenn ein Schutzmodus des Bündelungsgruppenportals ein Rücksetzmodus ist, Auslösen jedes Bündelungsanschlusses im Bündelungsgruppenportal, um ihre jeweiligen eine(n) oder mehrere(n) ausgeführten Dienste oder Sitzungen anzupassen;
vorzugsweise umfasst das Verfahren nach dem Auslösen jedes Bündelungsanschlusses im Bündelungsgruppenportal zur Anpassung ihrer jeweiligen einen oder mehreren ausgeführten Dienste oder Sitzungen weiter Folgendes:
das Senden, durch den Bündelungsanschluss, von Anzeigeinformationen, die eine(n) oder mehrere ausgeführte Dienste oder Sitzungen ausführen, nach der Anpassung.

7. Das Verfahren gemäß Anspruch 1, **dadurch gekennzeichnet, dass** es weiter Folgendes umfasst:
wenn ein Bündelungskanal, der dem Bündelungsanschluss entspricht, einen Fehler hat oder nicht verfügbar ist oder von der Bündelungskanalgruppe getrennt ist, das Auslösen eines Bündelungsgruppenportals, zu dem der Bündelungsanschluss gehört, um eine Bündelungsanschlusssequenz anzupassen, die jedem Dienst oder jeder Sitzung entspricht; und
die Neuerfassung, durch das Bündelungsgruppenportal, zu dem der Bündelungsanschluss gehört, eines/einer oder mehrerer Dienste oder Sitzungen, die von entsprechenden Bündelungsanschlüssen ausgeführt werden, nach der angepassten Bündelungsanschlusssequenz, die jedem Dienst oder jeder Sitzung entspricht;
vorzugsweise umfasst das Verfahren weiter:
das Senden, durch einen Bündelungsanschluss, der einen Dienst oder eine Sitzung des Bündelungsanschlusses ausführt, modifizierter Anzeigeinformationen, wobei ein Bündelungsanschluss des gegenüberliegenden Endes eine(n) oder mehrere Dienste oder Sitzungen, die entsprechend der vordefinierten Methode aktuell vom Bündelungsanschluss des gegenüberliegenden Endes ausgeführt werden, modifiziert oder festlegt, je nach den modifizierten Anzeigeinformationen; und
das Empfangen, durch den Bündelungsanschluss, der den Dienst oder die Sitzung des Bündelungsanschlusses ausführt, von Anzeigeinformationen, die vom Bündelungsanschluss des gegenüberliegenden Endes erneut gesendet wurden, um eine Neuverhandlung durchzuführen;
oder vorzugsweise umfasst das Verfahren weiter:
wenn der Bündelungskanal, der einem oder mehreren Bündelungsanschlüssen entspricht, zum Dienst zurückkehrt oder erneut Teil der Bündelungskanalgruppe wird, wenn ein Schutzmodus des Bündelungsgruppenportals ein Rücksetzmodus ist, Auslösen des Bündelungsgruppenportals, um die Bündelungsanschlusssequenz neu anzupassen; vorzugsweise umfasst das Auslösen des Bündelungsgruppenportals zur Anpassung der Bündelungsanschlusssequenz das Auslösen der Anpassung des/der einen oder mehreren Dienste oder Sitzungen, die aktuell vom Bündelungsanschluss ausgeführt werden.

8. Das Verfahren gemäß Anspruch 1, **dadurch gekennzeichnet, dass** es weiter Folgendes umfasst:
wenn ein Bündelungskanal, der einem oder mehreren Bündelungsanschlüssen entspricht, zur Bündelungskanalgruppe hinzugefügt wird, das Auslösen der Modifikation einer Dienstbündelungsanschlusssequenz.

9. Das Verfahren gemäß Anspruch 6 oder Anspruch 7, **dadurch gekennzeichnet, dass** ein ausgefallener Bündelungskanal über einen Konnektivitäts-Fehlermanagement-, Connectivity Fault Management - CFM -, Mechanismus erfasst wird und die Bündelungsanschlusssequenz, die jedem auf diesem Bündelungskanal gesendeten Dienst oder jeder auf diesem Bündelungskanal gesendeten Sitzung entspricht, durchsucht wird und ein Bündelungsanschluss, der jeden Dienst oder jede Sitzung sendet, neu festgesetzt wird.

10. Das Verfahren gemäß einem beliebigen der Ansprüche 1 bis 9, **dadurch gekennzeichnet, dass** die Anzeigeinformationen ein Typ-Länge-Wert-, Type Length Value - TLV -, Feld sind oder die Anzeigeinformationen in einer Kanalbündelungs-Steuerungsprotokoll-, Link Aggregation Control Protocol-LACP -, Nachricht enthalten sind.

11. Eine Vorrichtung zur Verkehrspfadverhandlung in einer Kanalbündelungsgruppe, **dadurch gekennzeichnet, dass** sie Folgendes umfasst:
eine Verarbeitungskomponente (10), konfiguriert, um Anzeigeinformationen zu erfassen und eine(n) oder mehrere Dienste oder Sitzungen zu bestimmen, die aktuell von einem Bündelungsanschluss eines Endes der Kanalbündelungsgruppe ausgeführt werden, wobei die Anzeigeinformationen eine(n) oder mehrere Dienste oder Sitzungen ausführen, die aktuell von einem Bündelungsanschluss des gegenüberliegenden Endes der Kanalbündelungsgruppe ausgeführt werden; und
eine Verkehrsverteilungskomponente (20), konfiguriert, um Verkehr gemäß einem/einer oder mehreren Diensten oder Sitzungen zu verteilen, die aktuell von jedem der Bündelungsanschlüsse in der Kanalbündelungsgruppe ausgeführt werden;
wobei die Verarbeitungskomponente (10) weiter konfiguriert ist, um den/die einen oder mehreren Dienste oder Sitzungen, die aktuell vom Bündelungsanschluss ausgeführt werden, entsprechend einer vordefinierten Methode zu modifizieren oder festzulegen;
wobei die Verarbeitungskomponente (10) eines von Folgendem umfasst:
ein erstes Verarbeitungselement (100), konfiguriert, um, falls der/die einen oder mehreren aktuell ausgeführten Dienste oder Sitzungen mit dem/der einen oder mehreren Diensten oder Sitzungen in den Anzeigeinformationen inkonsistent sind, einen Vergleich mit einer Priorität eines Bündelungsgruppenportals durchzuführen, zu dem ein Bündelungsanschluss eines gegenüberliegenden Endes gehört, basierend auf einem Prioritätsverhältnis des Bündelungsgruppenportals, zu welchem der Bündelungsanschluss gehört, um festzustellen, ob der/die einen oder mehreren Dienste oder Sitzungen, die aktuell vom Bündelungsanschluss ausgeführt werden, modifiziert werden müssen; und
ein zweites Verarbeitungselement (102), konfiguriert, um zu beurteilen, ob die einen oder mehreren Dienste oder Sitzungen, die aktuell vom Bündelungsanschluss ausgeführt werden, modifiziert werden müssen, entsprechend den empfangenen Anzeigeinformationen, basierend auf einer Master-Slave-Beziehung des Bündelungsgruppenportals, zu dem der Bündelungsanschluss gehört;
ein drittes Verarbeitungselement (103), konfiguriert, um, wenn der Bündelungsanschluss nicht die einen oder mehreren Dienste oder Sitzungen bildet, die aktuell vom Bündelungsanschluss ausgeführt werden, oder der Inhalt des aktuell ausgeführten Dienstes oder der aktuell ausgeführten Sitzung Null ist, die einen oder mehreren Dienste oder Sitzungen, die aktuell vom Bündelungsanschluss ausgeführt werden, entsprechend den empfangenen Anzeigeinformationen festzulegen.

12. Die Vorrichtung gemäß Anspruch 11, **dadurch gekennzeichnet, dass** in einem Bündelungsgruppenportal jeder Dienst oder jede Sitzung einer Bündelungsanschlusssequenz entspricht.

13. Die Vorrichtung gemäß Anspruch 12, **dadurch gekennzeichnet, dass** die Verarbeitungskomponente (10) konfiguriert ist, um, gemäß der Bündelungsanschlusssequenz, die jedem Dienst oder jeder Sitzung im Bündelungsgruppenportal entspricht, eine(n) oder mehrere Dienste oder Sitzungen zu erzeugen, der/die vom Bündelungsanschluss ausgeführt werden sollen, und/oder den/die eine(n) oder mehreren Dienste oder Sitzungen, die aktuell vom Bündelungsanschluss ausgeführt werden.

## Revendications

1. Procédé de négociation de chemin de trafic dans un groupe d'agrégation de liens, **caractérisé en ce qu'**il comprend les opérations suivantes :
acquérir, par un port d'agrégation d'une extrémité du groupe d'agrégation de liens, une information d'indication, et déterminer un ou plusieurs services ou sessions actuellement portés par le port d'agrégation, l'information d'indication portant un ou plusieurs services ou sessions actuellement portés par un port d'agrégation de l'extrémité opposée du groupe d'agrégation de liens (S202) ; et
répartir, par le groupe d'agrégation de liens, le trafic selon un ou plusieurs services ou sessions actuellement portés par chacun des ports d'agrégation dans le groupe d'agrégation de liens (S204) ;
dans lequel la détermination du ou des services ou sessions actuellement portés par le port d'agrégation comprend : la modification ou la fixation du ou des services ou sessions actuellement portés par le port d'agrégation selon une politique prédéfinie ;
dans lequel la modification, par le port d'agrégation, du ou des services ou sessions actuellement portés par le port d'agrégation selon la politique prédéfinie comprend :
dans le cas où le ou les services ou sessions actuellement portés sont incompatibles avec le ou les services ou sessions de l'information d'indication, faire une comparaison, par le port d'agrégation, avec une priorité d'un portail de groupe d'agrégation auquel appartient le port d'agrégation, basée sur une relation de priorité d'un portail de groupe d'agrégation auquel appartient le port d'agrégation pour déterminer si le ou les services ou sessions actuellement portés par le port d'agrégation doivent être modifiés ; ou évaluer, par le port d'agrégation, si le ou les services ou sessions actuellement portés par le port d'agrégation doivent être modifiés selon l'information d'indication reçue, en se basant sur une relation maître-esclave du portail de groupe d'agrégation auquel appartient le port d'agrégation ;
ou
dans lequel la fixation, par le port d'agrégation, du ou des services ou sessions actuellement portés par le port d'agrégation selon la politique prédéfinie comprend : quand le port d'agrégation ne forme pas le ou les services ou sessions actuellement portés par le port d'agrégation ou quand le contenu du service ou session actuellement porté est nul, alors fixer, par le port d'agrégation, le ou les services ou sessions actuellement portés par le port d'agrégation selon l'information d'indication reçue.

2. Procédé selon la revendication 1, **caractérisé en ce que** dans un portail de groupe d'agrégation, chaque service ou session correspond à une séquence de port d'agrégation.

3. Procédé selon la revendication 2, **caractérisé en ce que** selon la séquence de port d'agrégation qui correspond à chaque service ou session dans le portail de groupe d'agrégation, on génère un ou plusieurs services ou sessions devant être portés par le port d'agrégation, et/ou le ou les services ou sessions actuellement portés par le port d'agrégation.

4. Procédé selon la revendication 2, **caractérisé en ce que** la séquence de port d'agrégation est obtenue en triant selon une priorité de portage du service ou de la session ; de préférence, le ou les services ou sessions devant être portés par le port d'agrégation sont formés en collectant, en se basant sur toutes les séquences de port d'agrégation, chaque service ou session dont la séquence de port d'agrégation prend ce port d'agrégation comme port d'agrégation ayant une plus haute priorité de répartition du service ou de la session.

5. Procédé selon la revendication 1, **caractérisé en ce que** l'évaluation, par le port d'agrégation, si le ou les services ou sessions actuellement portés par le port d'agrégation doivent être modifiés selon l'information d'indication reçue, en se basant sur la relation de priorité du portail de groupe d'agrégation auquel appartient le port d'agrégation, ou en se basant sur une relation maître-esclave du portail de groupe d'agrégation auquel appartient le port d'agrégation comprend :
quand la priorité du portail de groupe d'agrégation auquel appartient le port d'agrégation est inférieure à celle du portail de groupe d'agrégation auquel appartient le port d'agrégation de l'extrémité opposée, ou quand le portail de groupe d'agrégation auquel appartient le port d'agrégation est esclave du portail de groupe d'agrégation auquel appartient le port d'agrégation de l'extrémité opposée, alors modifier, par le port d'agrégation, le ou les services ou sessions actuellement portés par le port d'agrégation selon l'information d'indication reçue.

6. Procédé selon la revendication 1, **caractérisé en ce qu'**il comprend en outre :
quand un lien d'agrégation correspondant au port d'agrégation a un défaut ou est indisponible, ou est séparé d'un groupe de liens d'agrégation, déclencher un ou plusieurs autres ports d'agrégation autres que le port d'agrégation dans le groupe d'agrégation de liens pour modifier son ou ses services ou sessions actuellement portés ;
de préférence, le trafic du ou des services ou sessions originellement porté par le port d'agrégation est porté par un ou plusieurs autres ports d'agrégation disponibles autres que le port d'agrégation ;
de préférence, le portail de groupe d'agrégation auquel appartient le port d'agrégation recherche un port d'agrégation ayant une deuxième priorité la plus élevée dans chaque séquence de port d'agrégation correspondant audit ou auxdits services ou sessions actuellement portés par le port d'agrégation, et déclenche un ou plusieurs ports d'agrégation trouvés ayant la deuxième priorité la plus élevée pour modifier son ou ses services ou sessions actuellement portés ;
de préférence, le port d'agrégation ayant la deuxième priorité la plus élevée est un port disponible ou un port d'agrégation maître dans le portail de groupe d'agrégation ;
de préférence, le portail de groupe d'agrégation auquel appartient le port d'agrégation qui recherche le port d'agrégation ayant la deuxième priorité la plus élevée dans chaque séquence de port d'agrégation correspondant audit ou auxdits services ou sessions actuellement portés par le port d'agrégation, et qui déclenche le ou les ports d'agrégation trouvés ayant la deuxième priorité la plus élevée pour modifier son ou ses services ou sessions actuellement portés comprend :
l'envoi, par le port d'agrégation ayant la deuxième priorité la plus élevée, d'une information d'indication modifiée, le port d'agrégation de l'extrémité opposée modifiant ou fixant, selon l'information d'indication modifiée, un ou plusieurs services ou sessions actuellement portés par le port d'agrégation de l'extrémité opposée selon la politique prédéfinie ; et
la réception, par le port d'agrégation ayant la deuxième priorité la plus élevée, d'une information d'indication renvoyée par le port d'agrégation de l'extrémité opposée pour réaliser une renégociation ;
de préférence, le procédé comprend en outre :
quand le lien d'agrégation correspondant à un ou plusieurs ports d'agrégation revient au service ou rejoint le groupe de liens d'agrégation, si un mode de protection du portail de groupe d'agrégation est un mode inversé, alors déclencher chaque port d'agrégation du portail de groupe d'agrégation pour ajuster son ou ses services ou sessions portés respectifs ;
de préférence, après le déclenchement de chaque port d'agrégation du portail de groupe d'agrégation pour ajuster son ou ses services ou sessions portés respectifs, le procédé comprend en outre :
l'envoi, par le port d'agrégation, d'une information d'indication portant un ou plusieurs services ou sessions portés après l'ajustement.

7. Procédé selon la revendication 1, **caractérisé en ce qu'**il comprend en outre :
quand un lien d'agrégation correspondant au port d'agrégation a un défaut ou est indisponible, ou est séparé du groupe de liens d'agrégation, déclencher un portail de groupe d'agrégation auquel appartient le port d'agrégation pour ajuster une séquence de port d'agrégation correspondant à chaque service ou session ; et
réacquérir, par le portail de groupe d'agrégation auquel appartient le port d'agrégation, un ou plusieurs services ou sessions portés par des ports d'agrégation respectifs selon la séquence de port d'agrégation ajustée correspondant à chaque service ou session ;
de préférence, le procédé comprend en outre :
l'envoi, par un port d'agrégation qui porte un service ou session du port d'agrégation, d'une information d'indication modifiée, un port d'agrégation de l'extrémité opposée modifiant ou fixant, selon l'information d'indication modifiée, un ou plusieurs services ou sessions actuellement portés par le port d'agrégation de l'extrémité opposée selon la politique prédéfinie ; et
la réception, par le port d'agrégation qui porte le service ou session du port d'agrégation, d'une information d'indication renvoyée par le port d'agrégation de l'extrémité opposée pour réaliser une renégociation ;
ou de préférence, le procédé comprend en outre :
quand le lien d'agrégation correspondant à un ou plusieurs ports d'agrégation revient au service ou rejoint le groupe de liens d'agrégation, si un mode de protection du portail de groupe d'agrégation est un mode inversé, alors déclencher le portail de groupe d'agrégation pour réajuster la séquence de port d'agrégation, de préférence, le déclenchement du portail de groupe d'agrégation pour ajuster la séquence de port d'agrégation comprend : le déclenchement de l'ajustement du ou des services ou sessions actuellement portés par le port d'agrégation.

8. Procédé selon la revendication 1, **caractérisé en ce qu'**il comprend en outre :
quand un lien d'agrégation correspondant à un ou plusieurs ports d'agrégation rejoint le groupe de liens d'agrégation, déclencher la modification d'une séquence de port d'agrégation de service.

9. Procédé selon la revendication 6 ou 7, **caractérisé en ce qu'**un lien d'agrégation défectueux est détecté par l'intermédiaire d'un mécanisme de gestion de défauts de connectivité, CFM, et la séquence de port d'agrégation correspondant à chaque service ou session envoyé(e) sur ce lien d'agrégation est recherchée, et un port d'agrégation envoyant ledit service ou session est redéterminé.

10. Procédé selon l'une quelconque des revendications 1 à 9, **caractérisé en ce que** l'information d'indication est un champ de valeur de longueur de type, TLV ; ou l'information d'indication est portée dans un message de protocole de commande d'agrégation de liens, LACP.

11. Dispositif permettant la négociation de chemin de trafic dans un groupe d'agrégation de liens, **caractérisé en ce qu'**il comprend :
un composant de traitement (10), configuré pour acquérir une information d'indication, et déterminer un ou plusieurs services ou sessions actuellement portés par un port d'agrégation d'une extrémité du groupe d'agrégation de liens, l'information d'indication portant un ou plusieurs services ou sessions actuellement portés par un port d'agrégation de l'extrémité opposée du groupe d'agrégation de liens ; et
un composant de répartition de trafic (20), configuré pour répartir le trafic selon un ou plusieurs services ou sessions actuellement portés par chacun des ports d'agrégation dans le groupe d'agrégation de liens ;
dans lequel le composant de traitement (10) est en outre configuré pour modifier ou fixer le ou les services ou sessions actuellement portés par le port d'agrégation selon une politique prédéfinie ;
dans lequel le composant de traitement (10) comprend un des éléments suivants :
un premier élément de traitement (100), configuré pour, dans le cas où le ou les services ou sessions actuellement portés sont incompatibles avec le ou les services ou sessions de l'information d'indication, faire une comparaison avec une priorité d'un portail de groupe d'agrégation auquel appartient un port d'agrégation d'une extrémité opposée basée sur une relation de priorité du portail de groupe d'agrégation auquel appartient le port d'agrégation pour déterminer si le ou les services ou sessions actuellement portés par le port d'agrégation doivent être modifiés ; et
un deuxième élément de traitement (102), configuré pour évaluer si le ou les services ou sessions actuellement portés par le port d'agrégation doivent être modifiés selon l'information d'indication reçue, en se basant sur une relation maître-esclave du portail de groupe d'agrégation auquel appartient le port d'agrégation ;
un troisième élément de traitement (103), configuré pour fixer, quand le port d'agrégation ne forme pas le ou les services ou sessions actuellement portés par le port d'agrégation ou quand le contenu du service ou session actuellement porté est nul, le ou les services ou sessions actuellement portés par le port d'agrégation selon l'information d'indication reçue.

12. Dispositif selon la revendication 11, **caractérisé en ce que** dans un portail de groupe d'agrégation, chaque service ou session correspond à une séquence de port d'agrégation.

13. Dispositif selon la revendication 12, **caractérisé en ce que** le composant de traitement (10) est configuré pour générer, selon la séquence de port d'agrégation correspondant à chaque service ou session dans le portail de groupe d'agrégation, un ou plusieurs services ou sessions devant être portés par le port d'agrégation, et/ou le ou les services ou sessions actuellement portés par le port d'agrégation.
